(19) Europäisches Patentamt
European Patent Office
Office européen des brevets

(11) Veröffentlichungsnummer **0 011 177** B1

# (12) EUROPÄISCHE PATENTSCHRIFT

(45) Veröffentlichungstag der Patentschrift: **21.04.82**

(51) Int. Cl.³: **C 09 B 31/065**, C 09 B 43/28, D 06 P 3/24 // C07C143/26

(21) Anmeldenummer: **79104201.3**

(22) Anmeldetag **29.10.79**

(54) **Disazoverbindungen, Verfahren zu ihrer Herstellung sowie Verfahren zum Färben und Bedrucken von Polyamidfasermaterialien.**

(30) Priorität: **11.11.78 DE 2849086**

(43) Veröffentlichungstag der Anmeldung: **28.05.80 Patentblatt 80/11**

(45) Bekanntmachung des Hinweises auf die Patenterteilung: **21.04.82 Patentblatt 82/16**

(84) Benannte Vertragsstaaten: **CH DE FR GB**

(56) Entgegenhaltungen:
**DE-A-1 794 389**
**FR-A-2 103 494**
**FR-A-2 187 859**

(73) Patentinhaber: **BAYER AG, Zentralbereich Patente, Marken und Lizenzen, D-5090 Leverkusen 1, Bayerwerk (DE)**

(72) Erfinder: **Nickel, Horst, Dr., Fontanestrasse 23, D-5090 Leverkusen 1 (DE)**

EP 0 011 177 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Disazoverbindungen, Verfahren zu ihrer Herstellung sowie Verfahren zum Färben und Bedrucken von Polyamidfasermaterialien

Die Erfindung betrifft Disazoverbindungen, Verfahren zu ihrer Herstellung und Verfahren zum Färben und Bedrucken von natürlichen und synthetischen Polyamidfasermaterialien.

Die Verbindungen entsprechen in Form der freien Säure der Formel

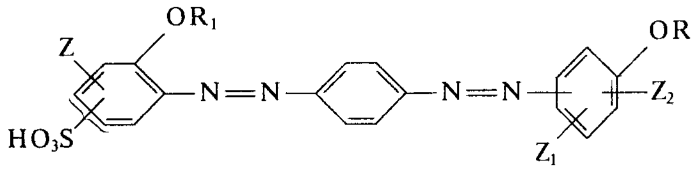

(I)

in der

$R_1$ $C_1-C_6$-Alkyl vorzugsweise Methyl,
R gegebenenfalls durch Hydroxy substituiertes $C_1-C_6$-Alkyl,
Z, $Z_1$, $Z_2$ Wasserstoff, $C_1-C_6$-Alkyl vorzugsweise Methyl, Halogen vorzugsweise Chlor, $C_1-C_6$-Alkoxy vorzugsweise Methoxy und Ethoxy bezeichnen und die $-SO_3H$-Gruppe in 4- oder 5-Stellung zur Azogruppe steht.

Bevorzugt sind Disazoverbindungen, die in Form der freien Säure der Formel

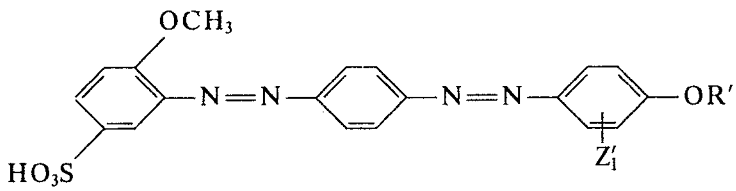

(II)

entsprechen, worin

$Z_1'$ Wasserstoff, Methyl, Methoxy oder Ethoxy und
R' $C_1-C_4$-Alkyl bezeichnen.

Besonders bevorzugt sind Disazoverbindungen, die in Form der freien Säure der Formel

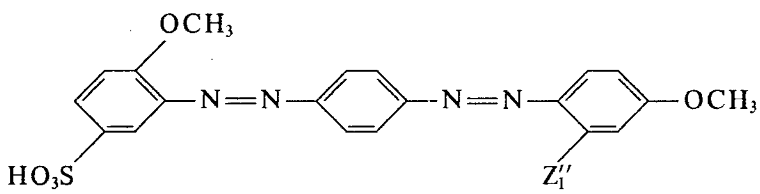

(IIa)

entsprechen, worin

$Z_1''$ Wasserstoff und Methyl bezeichnen sowie Gemische dieser Farbstoffe beispielsweise im molaren Verhältnis 1 : 2.

Zur Herstellung der Verbindung der Formel (I) werden Aminoazoverbindungen der Formel

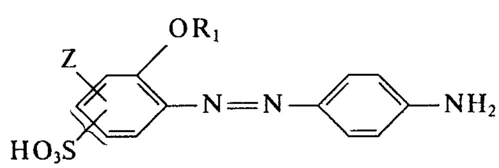

(III)

diazotiert und auf Verbindungen der Formel

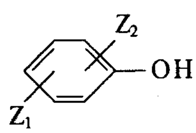

(IV)

gekuppelt und die erhaltenen Hydroxydisazoverbindungen alkyliert.

Diazotierung, Kupplung und Alkylierung werden in üblicher Weise vorgenommen. Zur Alkylierung verwendet man übliche Alkylierungsmittel wie beispielsweise Alkylsulfate, Alkylchloride, Alkylbromide, Arylsulfonsäureester, Alkylenoxid; beispielhaft erwähnt seien: Dimethyl- und Diethylsulfat, Methylchlorid, Ethylchlorid, Propylbromid und -jodid, Ethylen-, Propylen- und Butylenoxid, Benzol- und Toluol-sulfonsäure-methyl- und -ethylester.

Als Kupplungskomponenten (IV) seien genannt:
Phenol, o-, m-, p-Kresol, 2- oder 3-Chlorphenol, 2,5- oder 2,6-Dichlorphenol, 2,3-, 2,4-, 2,5-, 3,5-, 2,6-Dimethylphenol, 2-Chlor-6-methyl-phenol, 3- oder 5-Chlor-2-methyl-phenol, 6-Chlor-3-methylphenol, 2-Ethylphenol, 2 sek-Butyl-phenol, 5-Methyl-2-isopropyl-phenol, 2- oder 3-Methoxy-phenol, Resorcin.

Geeignete Aminoazoverbindungen (III) sind beispielsweise:

4-Amino-2'-methoxy-azobenzol-5'-sulfonsäure,
4-Amino-2'-ethoxy-azobenzol-5'-sulfonsäure,
4-Amino-2'-methoxy-azobenzol-4'-sulfonsäure,
4-Amino-2'-methoxy-5'-chlor-azobenzol-4'-sulfonsäure,
4-Amino-2'-methoxy-3'-chlor-azobenzol-5'-sulfonsäure,

die auf üblichem Wege durch Azokupplung vorzugsweise mit Anilin-N-methansäure und anschließende Verseifung der $-CH_2-SO_3H$-Gruppierung erhalten werden.

Die neuen Verbindungen sind geeignet zum Färben und Bedrucken von natürlichen und synthetischen amidgruppenhaltigen Fasermaterialien, beispielsweise solchen aus Wolle, Seide und insbesondere synthetischen Superpolyamidfasern.

Anwendung für die Färberei finden die Farbsalze der Verbindungen wobei die Natrium-, Kalium-, Lithium-, Ammonium- oder substituierten Ammoniumsalze in Frage kommen. Gegebenenfalls kann auch die Herstellung einer Farbstofflösung der Farbsalze in wäßriger und/oder organischen Medien erwünscht sein.

Die erhaltenen Färbungen insbesondere aus synthetischen Polyamidmaterialien, zeichnen sich durch sehr gute Echtheitseigenschaften aus.

Besonders zu erwähnen sind hervorragende Lichtechtheiten, sehr gute Naßechtheiten und insbesondere sehr günstiges Kombinationsverhalten mit anderen geeigneten Polyamid-Farbstoffen.

Darüber hinaus besitzen die Farbstoffe auf Grund ihres einfachen Aufbaus eine ausgezeichnete Wirtschaftlichkeit.

Aus der Literatur sind bereits zahlreiche Disazofarbstoffe bekannt, die in der ersten Diazokomponente einen o-ständigen Alkoxyrest neben einer Sulfonsäuregruppe und in der Kupplungskomponente einen p-Alkoxyrest tragen, jedoch im mittleren Benzolkern weitgehend beliebig substituiert sind.

So ist beispielsweise in der US-A-4 092 103 ein Farbstoff beschrieben, der sich rein formal von den erfindungsgemäßen Farbstoffen durch die Anwesenheit einer Methoxygruppe in dem mittleren Benzolring unterscheidet.

Überraschenderweise sind die erfindungsgemäßen Farbstoffe diesem konstitutionell nächstvergleichbaren bekannten Farbstoff hinsichtlich der besseren Lichtechtheit der Polyamidfärbungen und der besseren Kombinierbarkeit mit einem handelsüblichen Blaufarbstoff der Spitzenklasse überlegen.

Im Vergleich zu dem aus jener US-Patentschrift bekannten Farbstoff stellen Farbstoffe ähnlichen Typs gemäß FR-A-2 187 859 einen weiter entfernten Stand der Technik dar, da in der dort angegebenen ziemlich allgemeinen Formel keine konkreten Angaben über die Position des charakteristischen Alkoxyrests in der ersten Diazokomponente gemacht werden.

## Beispiel

30,7 g (0,1 Mol) 4-Amino-2'-methoxy-azobenzol-5'-sulfonsäure — hergestellt durch Kupplung von diazotierter 2-Amino-anisol-4-sulfonsäure mit Anilin-N-methansäure und anschließende alkalische Verseifung — werden in 350 ml Wasser neutral gelöst und 24 ml 30%ige wäßrige Natriumnitritlösung zugefügt.

Die Lösung läßt man bei Raumtemperatur einlaufen in eine Vorlage von 35 ml Salzsäure (28 Vol.%ig) und 35 ml Wasser und rührt anschließend etwa eine Stunde, bis die Diazotierung beendet ist.

10 g (0,106 Mol) Phenol werden in 100 ml Wasser und 200 ml 20%iger Sodalösung bei Raumtemperatur gelöst und mit dem obigen Diazotierungsgemisch vereinigt, wobei überschüssige salpetrige Säure zuvor mit Amidosulfonsäure zerstört worden ist.

Die Phenolkupplung ist rasch beendet. Man läßt 2 Stunden rühren, neutralisiert die Farbstofflösung dann mit Salzsäure (28 Vol.%ig), stellt pH 6 ein und isoliert den ausgefallenen Farbstoff in üblicher Weise

Die erhaltenen Disazofarbstoffpaste wird mit 100 ml Wasser und Natronlauge bei 50°C und pH 12 gelöst.

Unter Einhaltung des pH-Wertes 10 bis 12 durch Zugabe von 40%iger Natronlauge wird bei 50 – 60° C unter kräftigem Rühren Dimethylsulfat zugetropft bis die Methylierung, die chromatographisch verfolgt wird, beendet ist.

Der erhaltene Farbstoff wird in üblicher Weise isoliert, gegebenenfalls in Wasser bei 60° C umgelöst und dann getrocknet.

Der Farbstoff stellt ein dunkles Pulver dar, das sich in Wasser mit gelber Farbe löst. Polyamidmaterial wird nach den üblichen Färbe-Verfahren in goldgelben Tönen gefärbt. Die Färbungen zeigen gute Naß- und Lichtechtheiten. Das Kombinationsverhalten ist ebenfalls sehr gut.

Färbeverfahren: 50 Milligramm des Farbstoffs werden in 100 Teilen Wasser heiß gelöst, 4 Milliliter 10%ige Essigsäure zugesetzt und ein 10 g Strang Polyamidfaser in das Färbebad eingebracht. Innerhalb 20 Minuten wird das Färbebad auf Kochtemperatur gebracht und dann eine Stunde gehalten. Danach wird gespült und bei 70 – 80° C getrocknet.

Verwendet man zur Methylierung Methylchlorid, so wird die Umsetzung im Autoklaven bei 100° C vorgenommen.

Verwendet man zur Alkylierung Diethylsulfat oder Ethylchlorid oder -bromid so erhält man Farbstoffe, die Polyamidmaterial in goldgelben Tönen färben und ähnliche Eigenschaften wie der methylierte Farbstoff haben.

Durch Kochen der neutralen Lösung des Phenolfarbstoffs mit Butylenoxid am Rückfluß wird ein Farbstoff erhalten, der Polyamidmaterial in goldgelben Tönen färbt.

Verwendet man als Kupplungskomponente an Stelle von Phenol die äquivalente Menge o- oder m-Kresol, so erhält man nach Methylierung (Methylchlorid) oder Ethylierung (Diethylsulfat/Ethylchlorid) goldgelbe Polyamid-Farbstoffe mit ähnlichen Eigenschaften wie beim Phenolfarbstoff.

Bei Verwendung von p-Kresol als Kupplungskomponente an Stelle von Phenol und Umsetzung mit Dimethylsulfat bzw. Ethylchlorid werden Farbstoffe erhalten die Polyamidmaterial in rotstichig gelben Tönen färben.

Verwendet man Resorcin als Kupplungskomponente, so erhält man nach Methylierung mit Dimethylsulfat bzw. Ethylierung mit Diethylsulfat Farbstoffe, die Polyamidmaterial in orangefarbenen Tönen färben.

Verwendet man als Diazokomponente an Stelle der 4-Amino-2'-methoxy-azobenzol-5'-sulfonsäure obigen Beispiels 4-Amino-2'-methoxy-azobenzol-4'-sulfonsäure so erhält man nach Kupplung mit Phenol oder o- oder m-Kresol und Methylierung mit Dimethylsulfat bzw. Ethylierung mit Diethylsulfat Farbstoffe, die Polyamidmaterial in gelborgane Tönen färben.

**Patentansprüche**

1. Disazoverbindungen die in Form der freien Säure der Formel

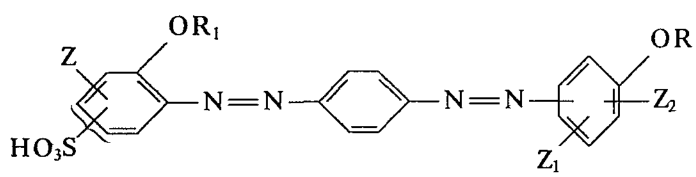

(I)

entsprechen,
in der

$R_1$ $C_1-C_6$-Alkyl
R gegebenenfalls durch Hydroxy substituiertes $C_1-C_6$-Alkyl,
Z, $Z_1$, $Z_2$ Wasserstoff, $C_1-C_6$-Alkyl, Halogen, $C_1-C_6$-Alkoxy bezeichnen und

die $-SO_3H$-Gruppe in 4- oder 5-Stellung zur Azogruppe steht oder deren Salze.

2. Verbindungen gemäß Anspruch 1, bei denen

$R_1$ Methyl,
Z, $Z_1$, $Z_2$ Wasserstoff, Methyl, Chlor, Methoxy, Ethoxy bezeichnen.

3. Disazoverbindungen die in Form der freien Säure der Formel

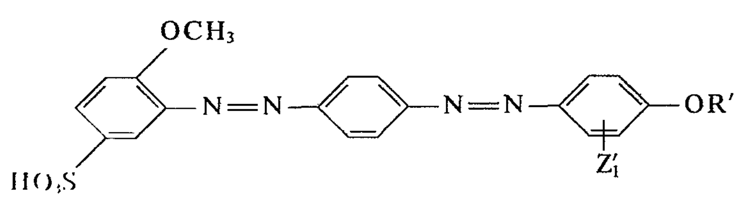

(II)

entsprechen,
in der

$Z_1'$ Wasserstoff, Methyl, Methoxy, Ethoxy und
$R'$ $C_1-C_4$-Alkyl bezeichnen.

4. Farbstoffmischungen enthaltend Disazoverbindungen, die in Form der freien Säure der Formel

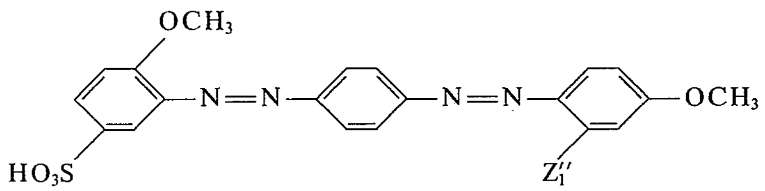

(IIa)

entsprechen, worin

$Z_1''$ Wasserstoff und Methyl bezeichnen.

5. Verfahren zur Herstellung von Verbindungen gemäß Anspruch 1, dadurch gekennzeichnet, daß man Verbindungen der Formel

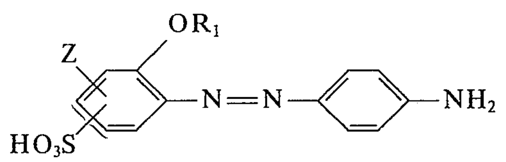

(III)

diazotiert und auf Verbindungen der Formel

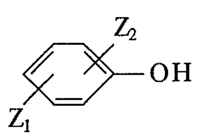

(IV)

kuppelt und die erhaltenen Hydroxydisazoverbindungen alkyliert.

6. Verfahren zum Färben und/oder Bedrucken von natürlichen und synthetischen Polyamidfasermaterialien, dadurch gekennzeichnet, daß man eine Verbindung gemäß den Ansprüchen 1 bis 4 verwendet.

**Claims**

1. Disazo compounds which, in the form of the free acid, have the formula

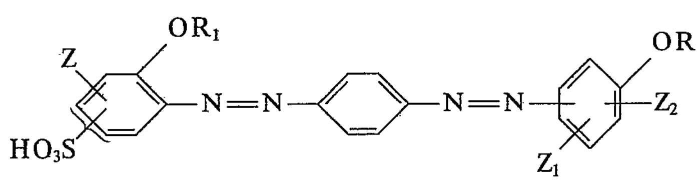

(I)

in which

$R_1$ denotes $C_1-C_6$-alkyl,
R denotes $C_1-C_6$-alkyl which is optionally substituted by hydroxyl and
Z, $Z_1$ and $Z_2$ denote hydrogen, $C_1-C_6$-alkyl, halogen or $C_1-C_6$-alkoxy and

the $-SO_3H$ group is in the 4-position or 5-position relative to the azo group, or their salts.

2. Compounds according to Claim 1, in which

$R_1$ denotes methyl and
Z, $Z_1$ and $Z_2$ denote hydrogen, methyl, chlorine, methoxy or ethoxy.

3. Disazo compounds which, in the form of the free acid, have the formula

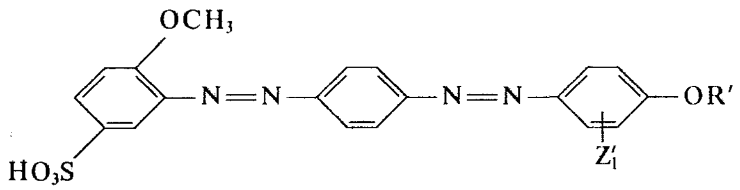

(II)

in which

$Z_1'$ denotes hydrogen, methyl, methoxy or ethoxy and
R' denotes $C_1-C_4$-alkyl.

4. Dyestuff mixtures containing disazo compounds which, in the form of the free acid, have the formula

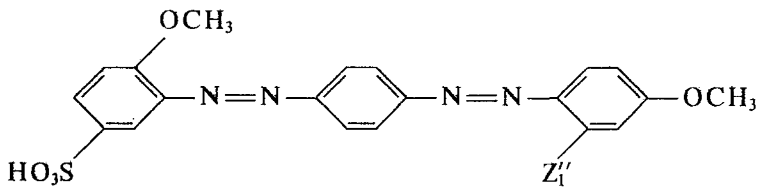

(IIa)

in which

$Z_1''$ denotes hydrogen and methyl.

5. Process for the preparation of compounds according to Claim 1, characterised in that compounds of the formula

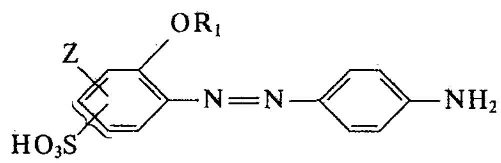

(III)

are diazotised and the diazo compounds are coupled with compounds of the formula

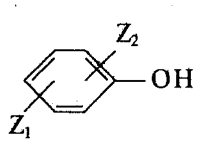

(IV)

and the resulting hydroxy-disazo compounds are alkylated.

6. Process for dyeing and/or printing natural and synthetic polyamide fibre materials, characterised in that a compound according to Claims 1 to 4 is used.

## Revendications

1. Composés disazoïques qui, sous la forme de l'acide libre, répondent à la formule:

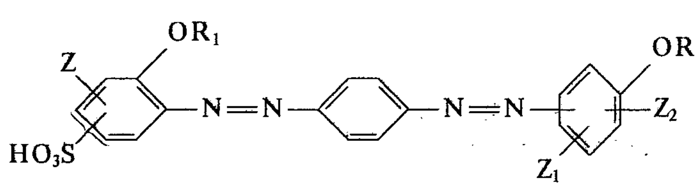

(I)

dans laquelle:

$R_1$ désigne un reste alkyle en $C_1$ à $C_6$
R désigne un reste alkyle en $C_1$ à $C_6$ éventuellement substitué par un radical hydroxy
Z, $Z_1$, $Z_2$ représentent de l'hydrogène, un reste alkyle en $C_1$ à $C_6$, un halogène, un reste alkoxy en $C_1$ à $C_6$ et

le groupe $-SO_3H$ est en position 4 ou en position 5 par rapport au groupe azo, ou leurs sels.

2. Composés suivant la revendication 1, dans lesquels

$R_1$ est un groupe méthyle,
Z, $Z_1$, $Z_2$ représentent de l'hydrogène, un groupe méthyle, du chlore, un groupe méthoxy ou un groupe éthoxy.

3. Composés disazoïques qui, sous la forme de l'acide libre, répondent à la formule:

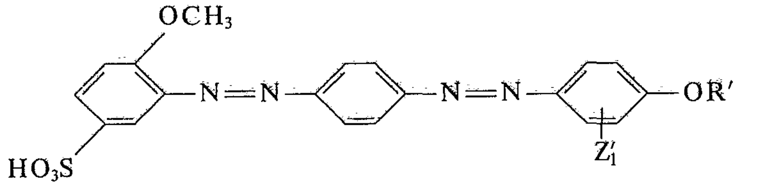

(II)

dans laquelle:

$Z_1'$ désigne l'hydrogène ou un reste méthyle, méthoxy ou éthoxy et
R' est un reste alkyle en $C_1$ à $C_4$.

4. Mélanges de colorants contenant des composés disazoïques qui, sous la forme de l'acide libre, répondent à la formule:

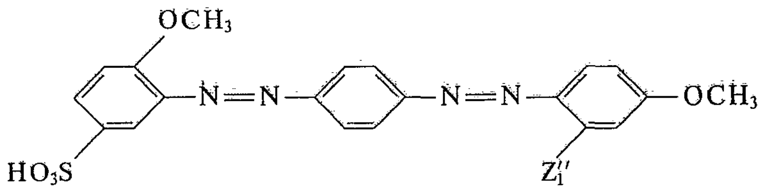

(IIa)

dans laquelle:

$Z_1''$ désigne l'hydrogène et le groupe méthyle.

5. Procédé de production de composés suivant la revendication 1, caractérisé en ce qu'on diazote des composés de formule:

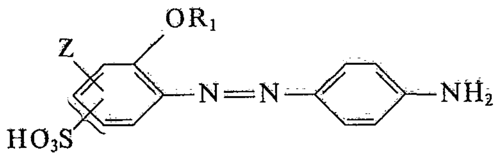

(III)

et on les copule sur des composés de formule:

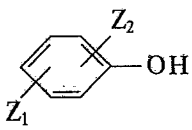

(IV)

et on alkyle les composés hydroxydisazoïques obtenus.

6. Procédé de teinture et/ou d'impression de matières en fibres de polyamide naturelles et synthétiques, caractérisé en ce qu'on utilise un composé suivant les revendications 1 à 4.